# EUROPEAN PATENT SPECIFICATION

(11) **EP 0 640 757 B1**
(45) Date of publication and mention of the grant of the patent: **03.11.1999**
(21) Application number: 94113627.7
(22) Date of filing: 31.08.1994
(51) Int. Cl.: F02D 19/02, F01N 3/20, F02D 41/22, F02D 41/14, F02D 35/00, F02M 9/10, F02M 21/04

(54) **Charge forming device**
Gemischbildungsvorrichtung
Dispositif de formation du melange

(30) Priority: 31.08.1993 JP 21638193; 31.08.1993 JP 21638293
(43) Date of publication of application: 01.03.1995
(73) Proprietor: YAMAHA HATSUDOKI KABUSHIKI KAISHA, Iwata-shi Shizuoka-ken, 438 (JP)
(72) Inventor: Iida, Yoshikatsu, c/o Yamaha Hatsudoki K.K., Iwata-Shi, Shizuoka-ken (JP)
(74) Representative: Grünecker, Kinkeldey, Stockmair & Schwanhäusser Anwaltssozietät

(56) References cited:
- EP-A- 0 510 585
- US-A- 4 376 369
- PATENT ABSTRACTS OF JAPAN vol. 12, no. 251 (M-718) 15 July 1988 & JP-A-63 038 648 (DAIHATSU MOTOR CO LTD.) 19 February 1988

## Description

This invention concerns a charge forming device of the venturi-type for gas fueled engines comprising a bleed air circuit including a bleed air control valve for controlling the air/fuel ratio supplied to the engine.

In general, the air/fuel mixture ratio of engines is enriched below a λ = 1 condition when operating at high speeds or under heavy loads, in order to keep the catalyst from overheating. They are also usually run rich compared to λ = 1 when cold-started to improve the starting characteristics of the engine. The "λ" referenced above is defined as the actual air/fuel ratio divided by the theoretical air/fuel ratio. Accordingly, in a stoichiometric state, λ is normally equal to 1 no matter what fuel composition is used.

Since various fuel compositions are used in engines which are gas-fueled, it is normally necessary to use a control map for each of the variety of fuel compositions. Such maps specify the number of steps which are required to attain the aforementioned rich running conditions, and their use poses an undue burden on the memory capacity of the ECU.

Also, for cold starts, a three-dimensional map is needed which takes into account the engine rpm while cranking, the negative pressure in the air intake and the aperture of the control valve (step number for the control motor). Such a map is normally used to increase the amount of fuel supply, and this also puts an excessive burden on ECU memory capacity.

Further a specialized valve is conventionally present to increase the fuel flow during times when operating in the aforementioned overheated range or during cold starts, and the incorporation of this valve complicates the structure and increases costs.

Another engine operating condition which necessitates controlling the air/fuel mixture deviant from the theoretically air/fuel ratio usually maintained, is a rapid deceleration after high engine speed, wherein the fuel supply is usually cut off to improve the fuel efficiency and to prevent unburnt fuel from entering the exhaust system. It has been proposed to perform this fuel cut-off in gas fueled engines by using a specialized solenoid valve to reduce the fuel in the gas fuel passage.

However, when such a specialized solenoid valve is used to cut off the fuel supply, the fuel supply is cut off entirely when the aforementioned rapid deceleration condition is detected and when the above-mentioned valve is turned off. When the deceleration stops, the valve switches back on to resume the fuel flow. That means the fuel supply is steeply increased from the zero fuel rate, and as a result a torque is generated that causes the vehicle to jolt. Moreover as mentioned above, the use of such a specialized valve contributes to the complexity of the structure, adds to the number of parts and increases costs.

A charge forming device comprising the features of the preamble portion of claim 1 is known from EP-A-0 510 585, which generally relates to a gas engine. This gas engine comprises a source of gaseous fuel stored under pressure as a liquid, an induction system for inducting atmospheric air and delivering a charge to a combustion chamber of the engine, a pressure regulator and a charge forming means for supplying fuel from said source to said induction system for mixture with the intake air, and a control means for controlling the amount of fuel supplied to the engine induction system. Further, this gas engine comprises means for introducing atmospheric air into said flow of gaseous fuel between said regulator and said control means.

The object of the present invention is to provide a charge forming device of the type mentioned in the preamble of claim 1, which is simple in structure and allows for a reliable control of safe engine running conditions.

This technical problem is solved by a charge forming device comprising the features of claim 1.

According to a preferred embodiment a detecting means is provided for detecting the engine rotational speed and a control unit is provided for controlling the aperture of the bleed air control valve during startups to supply a rich air /fuel ratio.

Preferably a detection means for sensing a rapid deceleration of the engine is provided and a control unit is provided for adjusting the aperture of the bleed air control valve during deceleration to lower the fuel supply volume.

Since the charge forming device according to the present invention allows to increase and to reduce, respectively the fuel flow in response to engine operating conditions by controlling the bleed air control valve, no specialized fuel supplementing valve is required and the structure of the device is simplified and an increase in costs can be avoided.

Further preferred embodiments of the present invention are laid down in the dependent claims.

Hereinafter the present invention is explained and illustrated in greater detail by means of a preferred embodiment thereof in conjunction with the accompanying drawings, wherein:

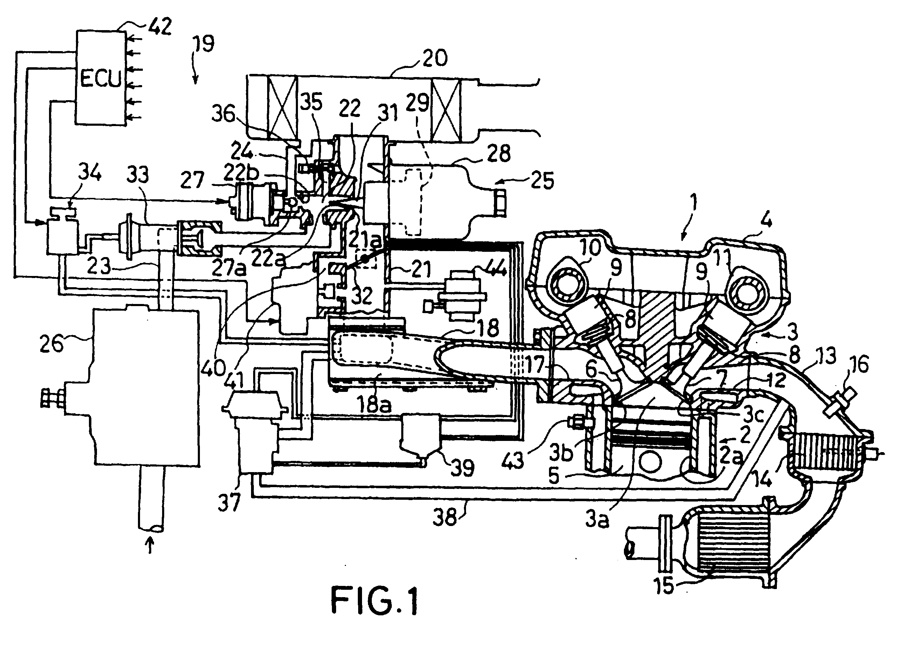

Fig. 1 is an overall component diagram of a LPG fueled engine with a charge forming device;

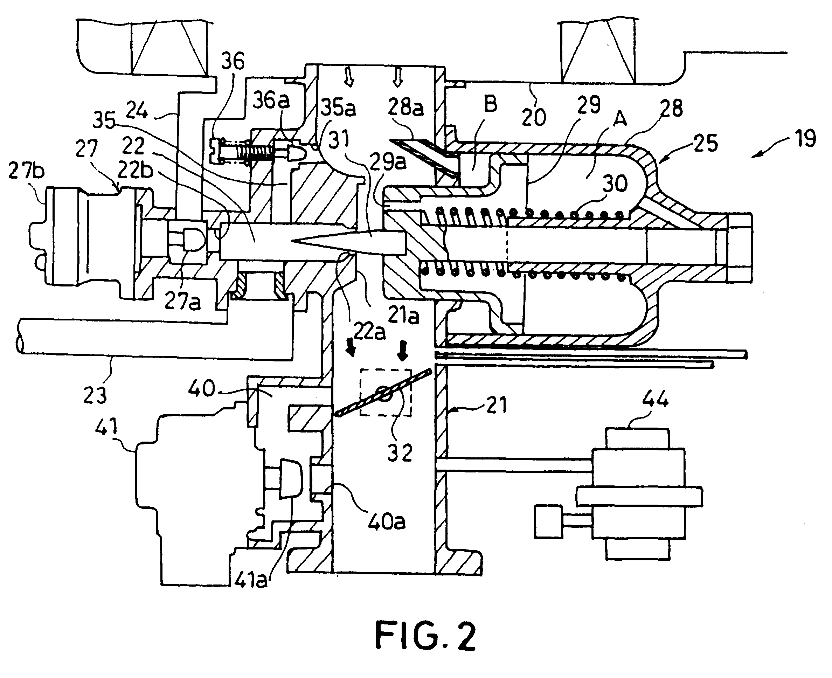

Fig. 2 shows an enlarged view of the charge forming device according to the embodiment of fig. 1;
Fig. 3 shows a graph describing the fuel flow volume versus the air intake volume for a plurality of apertures of the bleed air control valve for different stages of ageing;
Fig. 4 is a flow chart describing the control of fuel supplementation when cold starting the engine;
Fig. 5 is a flow chart describing the control of the air/fuel mixture supplied to the engine for a catalyst overheating during normal feedback control;
Fig. 6 is a flow chart describing the control of the air/fuel mixture supplied to the engine for a catalyst overheating during non-active feedback control;
Fig. 7 is a flow chart describing the control of the air/fuel mixture supplied to the engine for a rapid deceleration of the engine;
Fig. 8 shows an A/F control map for controlling the air/fuel ratio for engine running conditions necessitating an air/fuel ratio beyond the theoretical air/fuel ratio.

In the Figures, 1 represents a water-cooled, 4-cylinder 4-valve LPG-fueled engine which is equipped with an embodiment of this invention. Above cylinder block 2 of said engine 1 is cylinder head 3 which is attached by means of bolts. Head cover 4 is affixed over said cylinder head 3. Cylinder bores 2a are present in the aforementioned cylinder block 2 holding pistons 5 linked to the crankshaft.

In addition, there are air intake apertures 3b and exhaust apertures 3c in the combustion chamber area 3a of the aforementioned cylinder head which comprise air intake valves 6 and exhaust valves 7, respectively. Valve springs 8 hold said valves 6, 7 in a normally closed position, while, by means of the cam action of air intake and exhaust cams 10, 11, the lifters 9 press open the valves.

The above mentioned exhaust valve apertures 3c lead to the front wall of the cylinder head by exhaust ports 12. The openings of said exhaust ports 12 connect to exhaust manifold 13 and the catalysts 14 and 15 are located upstream and downstream of the juncture area of the exhaust manifold 13. An O₂ sensor 16 is present just slightly further upstream of the upstream catalyst 14 in the aforementioned exhaust manifold 13.

The above mentioned O₂ sensor transduces the difference between the oxygen concentration in the exhaust gases and the oxygen concentration in the atmosphere into an electrical signal. Its design is such that if this difference in oxygen concentration is below a certain level, in other words, if the air/fuel mixture ratio (A/F) is richer than the theoretical air/fuel ratio, a detection signal shall be emitted. Accordingly, in cases when the O₂ sensor 16 cannot emit a signal, or when the air/fuel mixture is leaner than theoretical, or when the exhaust gas temperature is less than about 350° C, for example, the O₂ sensor will not be activated. It would also be possible to employ an O₂ sensor that would emit a detection signal when the air fuel mixture is leaner than the theoretical mixture.

The above described air intake valve aperture 3b leads to the rear wall of the cylinder head by means of air intake port 17. The aperture of this air intake port 17 on the rear wall communicates with an air intake manifold 18 comprising a plenum chamber 18a. This plenum chamber 18a in turn comprises an EGR passage 38 containing an EGR valve 37, which is driven open and closed by air intake negative pressure from a regulator 39 so that EGR gas is introduced into the above mentioned plenum chamber 18a.

Also, the opening on the upstream side of the aforementioned plenum chamber 18a communicates with an air cleaner 20 by means of a charge forming device 19. This charge forming device 19 is composed of the above-mentioned air cleaner 20 and plenum chamber 18a, which are connected by an air intake passage 21; further of a fuel supply chamber 22 for the gaseous fuel source and gas fuel passage 23, which form one unit with said air intake passage 21; a bleed air passage 24, which, upstream of the above mentioned fuel supply chamber 22's gas fuel connection area, communicates with the inside of the aforementioned air cleaner 20; a variable venturi type mixer (mixer) 25, which controls the cross section of the above mentioned air intake passage 21 in the venturi area 21a; a regulator 26, which controls the fuel pressure supplied to the aforementioned fuel supply chamber 22; and a bleed air control valve 27 which, by controlling the volume of bleed air, also controls the amount of fuel going to the fuel supply chamber 22.

The above mentioned mixer 25 is mounted in the venturi area 21a of the air intake passage 21 and is slidably mounted inside a closed, boxy chamber 28. It is equipped with a piston 29 seated in the aforementioned venturi area 21a. Said piston 29 is held by spring 30 so that it is pressed in the closed direction inside chamber 28. Also, the above mentioned chamber 28, which is partitioned by piston 29 into two chambers, communicates, in chamber A, through a hole 29a, with the above mentioned venturi area 21a, and in chamber B, through a connecting pipe 28a, with the upstream side of the above mentioned venturi area 21a.

A throttle valve 32 is positioned on the downstream side of the mixer in the above mentioned air intake passage 21; opening said throttle valve 32 increases the air intake flow volume and applies a negative pressure on the above mentioned venturi area 21a. This negative pressure is introduced into the above mentioned chamber A, which causes a piston 29 to overcome the force of a spring 30 and to move to enlarge the cross section in the venturi area 21a.

In addition, an idle bypass 40 is present in the above mentioned air intake passage 21 to bypass around the throttle valve 32. An idle control valve 41 is set in said passage 40 to variably control its cross sectional area. When the idling rpm is below a certain value, the idle valve 41 opens the idle bypass 40 and increases the idling rpm.

The above mentioned regulator 26 is a two-stage pressure-decreasing regulator composed of a first pressure control valve which decreases the pressure from the fuel source to the required gas pressure, and a second pressure-adjustment valve which further lowers the gas pressure from said first pressure control valve to a pressure which is slightly lower than atmospheric pressure.

The above mentioned bleed air control valve 27 comprises a valve body 27a operated by a step motor 27b in order to control the aperture 22b of the bleed air passage 24 into the fuel supply chamber. When the step number of step motor 27b is zero, the above mentioned aperture 22b is fully closed by said bleed air control valve 27 (aperture 0%); when the step number is 200, it is fully open (aperture 100%).

The above mentioned bleed air control valve 27 also functions as a fuel reducing valve. It improves fuel economy by decreasing the amount of fuel flow to the combustion chamber during rapid engine deceleration. It also prevents unburnt fuel from flowing, as such, into the catalyst 14.

A main jet orifice 22a and a needle valve (metering rod) 31 have been set at the interface wall between the above mentioned fuel supply chamber and venturi area at the end of the above mentioned piston 29. The main jet orifice 22a and needle valve 31 are configured and sized in such a way as to maintain a constant A/F ratio (λ = 1) under normal operating conditions, even when there is a varying amount of intake air, in accordance with the standard step setting for the above mentioned bleed air control valve 27.

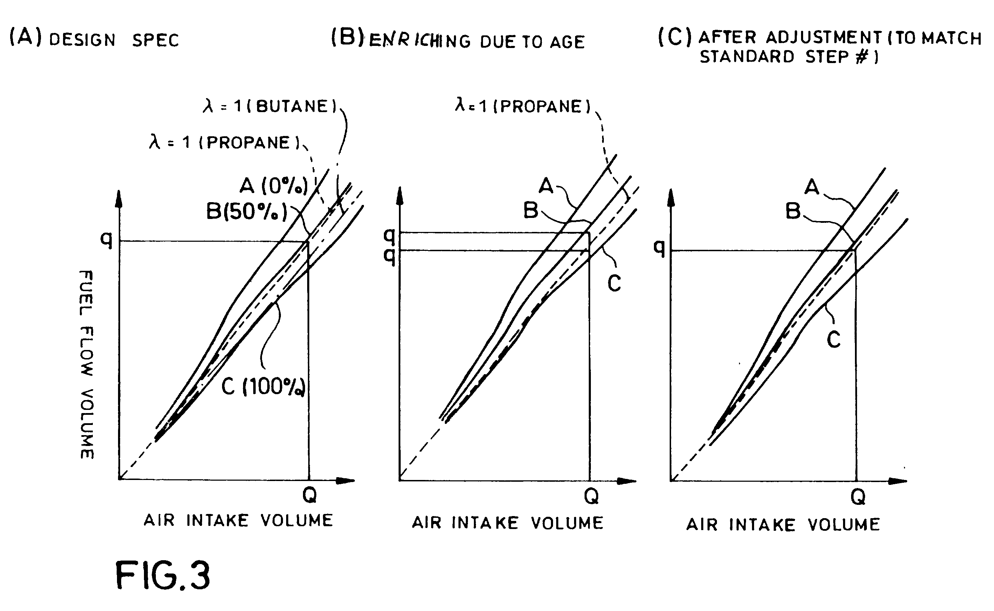

To explain this matter in detail with reference to Figure 3, which shows the air intake volume on the abscissa and fuel flow volume on the ordinate, the broken line in Figure 3(a) shows the flow characteristics (computed values) for λ = 1 for the case of propane fuel. Curves A through C show different apertures for the above mentioned aperture 22b controlled by bleed air control valve 27 (called "bleed air control valve aperture" below), 0% (step 0), 50% (step 100) and 100% (step 200), respectively. Experimental results indicate that when the bleed air control valve aperture is set at 50% (step 100), the amount of fuel flow q changes with respect to variation in air intake flow Volume Q in a manner which approximately follows the above-described λ = 1 criterion In other words, the step number of the bleed air control valve is maintained at 100 irrespective of the aperture of the throttle valve 32.

In addition, upstream of the venturi area 21a in the aforementioned air intake passage 21, the auxiliary air passage 35 communicates with the inside of the above mentioned fuel supply chamber 22. A manually operated needle valve 36 is also mounted in the auxiliary air passage 35. By using the screw-type adjustment of the needle valve 36, the valve body 36a adjusts the cross section of the aperture. For example, when the needle valve 36 is opened, then the amount of air flowing into the fuel supply chamber 22 increases, and if the bleed air control valve aperture is constant, then the amount of gaseous fuel will decrease commensurately, changing the A/F ratio toward the lean side. However, if a feedback control is operating, the bleed air valve 27, in order to maintain the λ = 1 condition, will select a lower step number.

42 is the ECU. This ECU 42 receives oxygen concentration signals from the O₂ sensor 16, engine temperature signals from the water temperature sensor 43, air intake negative pressure signals from the negative pressure sensor 44, as well as other signals, not shown in the Figure, concerning engine rpm, throttle aperture, air intake volume and the like which identify the operating condition of the engine. It controls the operation of the above mentioned bleed air control valve 27 and idle control valve 41.

Next, the operational effects of this embodiment will be described.

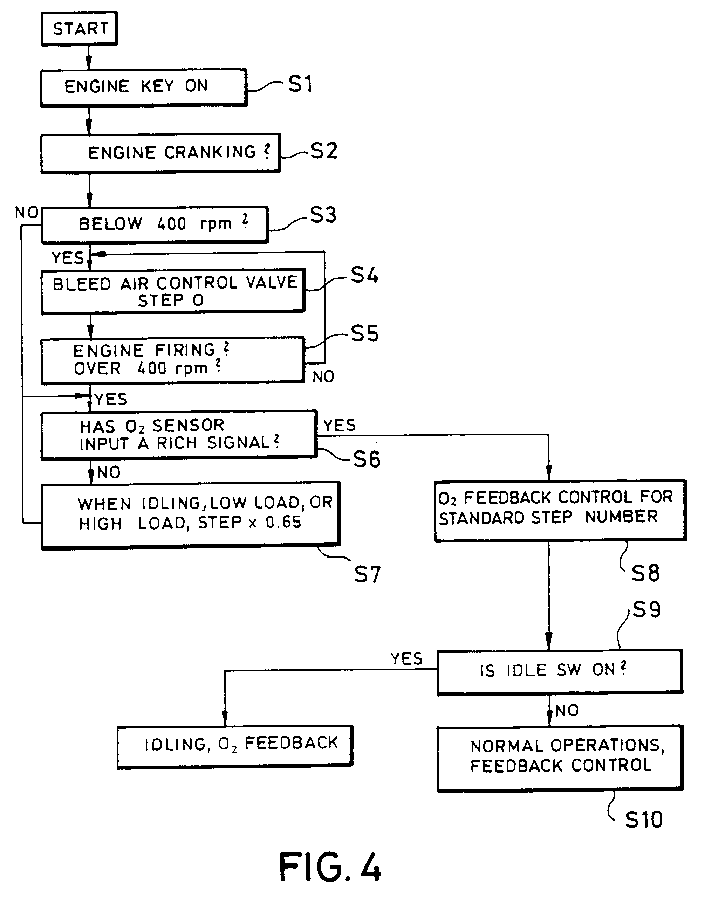

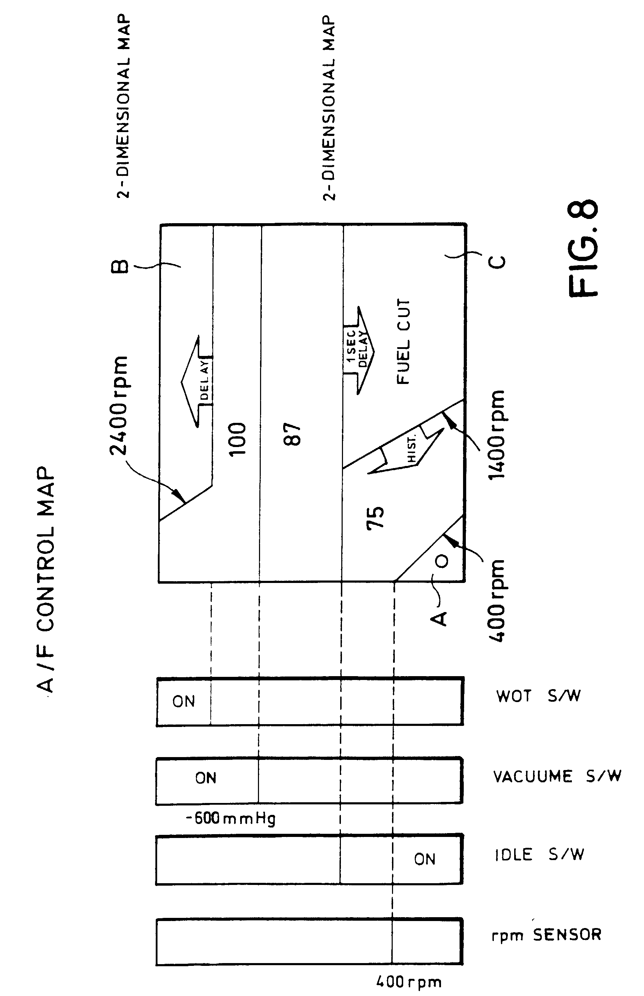

The aperture (step number) of the above mentioned bleed air control valve is controlled by the ECU 42 not only to regulate the A/F mixture ratio, but also as a means to increase the fuel supply during cold starts, as a means to increase the fuel supply when the catalyst is in the overheated range, and as a means to cut off the supply of fuel during rapid deceleration. The operation of this control will now be described with reference to the flow charts in Figures 4 through 7 and control map in Figure 8.

First, the fuel supplementation when starting the engine will be explained.

When the ignition key is turned on and cranking commences to start the engine, the engine rpm is 400 rpm or less (meaning the engine has not yet fired). In this case, the bleed air control valve 27 is set at step 0 (see range A in Figure 8) and said control valve 27 remains fully closed (steps S1 through S4) in order to provide an air/fuel mixture conducive to combustion. The number of steps in this process may be set according to the specifics of the engine involved, and any number except zero may be used.

Since the criteria used to determine whether the engine is running or not is represented by the 400-rpm figure, then, if not, there will be a return to step S4 in which an appropriate mixture continues to be supplied. When the engine begins running, a decision is then made on whether or not there is input of a "rich" signal from the O₂ sensor, and until said rich signal is applied, the step number is only determined by whether the engine is idling, at low load or under high load operating conditions, and the standard step number is multiplied by 0.65 to determine the pre-activation step number (steps S5 through S7). The reason this rich-side step number is used is that the O₂ sensor employed is of the above described type which detects the air/fuel mixture being on the rich side, and therefore this arrangement is used to promote the activation of the O₂ sensor 16 because it is involved in the decision-making by being active or not.

After signals are received from the O₂ sensor 16, the O₂ feedback from said sensor is used as the basis of control (step S8). Then a decision is made on the operation of the idle switch, and when it is not ON, then the O₂ feedback control is performed on the basis of normal operations (steps S9-S11).

During idling, when the throttle valve 32 is completely closed that is the idle position, there is a reduced amount of intake air flowing through the venturi 21a, whereby the negative pressure in the venturi area 21a during idling is roughly equivalent to atmospheric pressure. As a result, the piston 29 in mixer 25 is deployed by the force of spring 30 to approximately fully close the venturi area 21a, the gap between the needle valve 31 and the main jet orifice 22a is at a minimum, and the fuel flow is also at a minimum level. If thereupon the throttle valve 32 is opened, the air flow of intake air in the venturi area 21a increases, causing the absolute negative pressure in the venturi area 21a to increase aswell, thereby the piston 29 opposes the force of the spring 30 and opens said venturi area 21a. The fuel flow also increases.

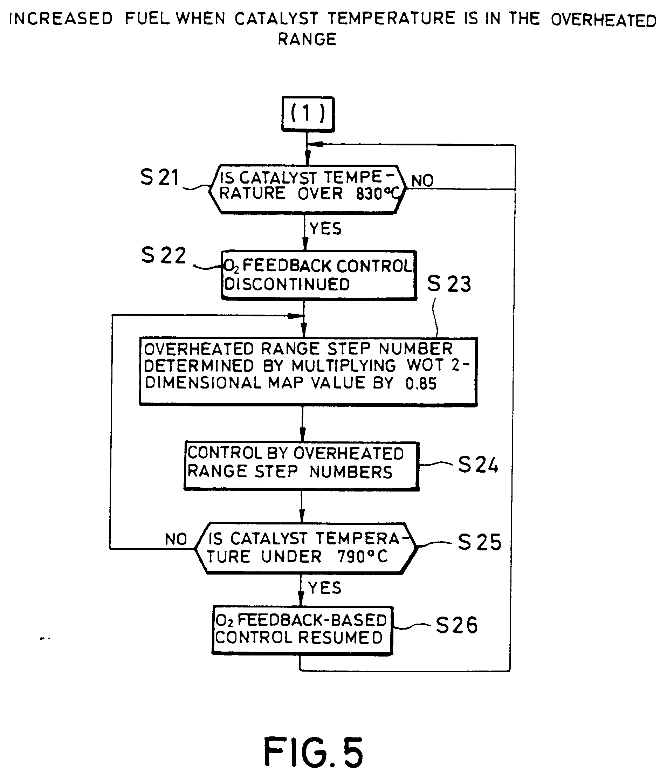

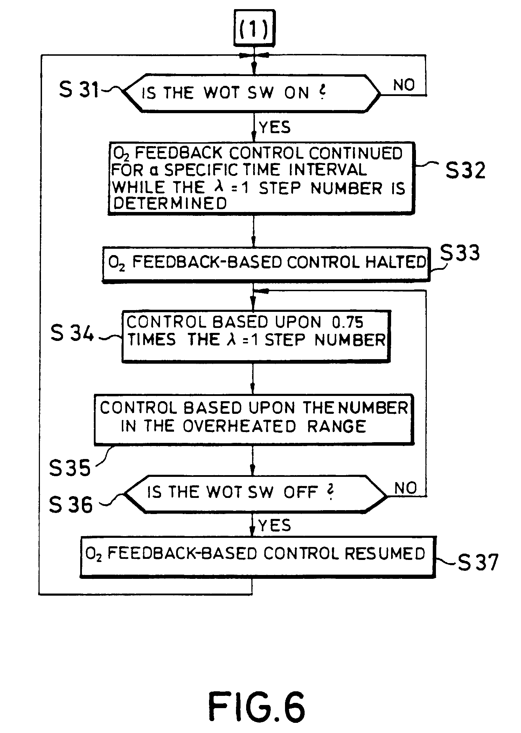

Next, an explanation will be provided, with reference to Figures 5 and 6, for the supplementation of fuel when the catalyst is overheated, for instance when it has been damaged by melting due to engine operation.

As shown in Figure 5, during normal operations when the feedback control is operating, if the temperature of the catalyst rises to 820° C -or higher, then O₂ feedback-based control is discontinued (steps S21-S22). At that time, the step number used for the aperture of the bleed air control valve is based on a WOT two-dimensional (see Table 1) internal map of values for engine rpm and bleed air control valve step number, where the step number is determined on the basis of the engine rpm: and then is multiplied by 0.85 to obtain the step number for the overheated range. When the step number for the overheated range has been determined by multiplication with 0.85, the corrected value is used as the step number for setting the aperture of the bleed air control valve (steps S23, S24). Thereupon a determination is made of whether or not the catalyst temperature is 790° C or less (step S25), and if it is higher than 790° C, the program returns to S23 where the above mentioned overheated range step number is further corrected by decreasing it by 1, and using that value to control the bleed air control valve. When the catalyst's temperature is 790° C or less, then feedback control is resumed (step S26).

**Table 1:**

| **WOT Two Dimensional Map** | | | | | |
|---|---|---|---|---|---|
| **Engine RPM** | 2800 | 3200 | 3600 | 4000 | 4400 |
| **Step Number** | 120 | 130 | 130 | 130 | 130 |

Also, as Figure 6 shows, when an ON signal from the WOT switch is emitted due to the engine rpm or throttle aperture value being above certain limits which will cause the catalyst to overheat, then the O₂ feedback control is used for a certain period of time to adjust the mixture to λ = 1 to determine the proper step number (steps S31, 32; see region B in Figure 8) before shifting to overheated range control. Then, the O₂ based feedback is halted and the step number is computed based upon multiplying the λ = 1 step number by 0.75, and that result is used as the control for the bleed air control valve aperture (steps S33-S35). After that, if the WOT switch is ON, there is a return to step S34, and the above mentioned overheated range step number is further corrected by decreasing it by 1, and that value is used to control the above mentioned bleed air control valve 27. When the WOT switches OFF, feedback based control resumes (steps S36, S37).

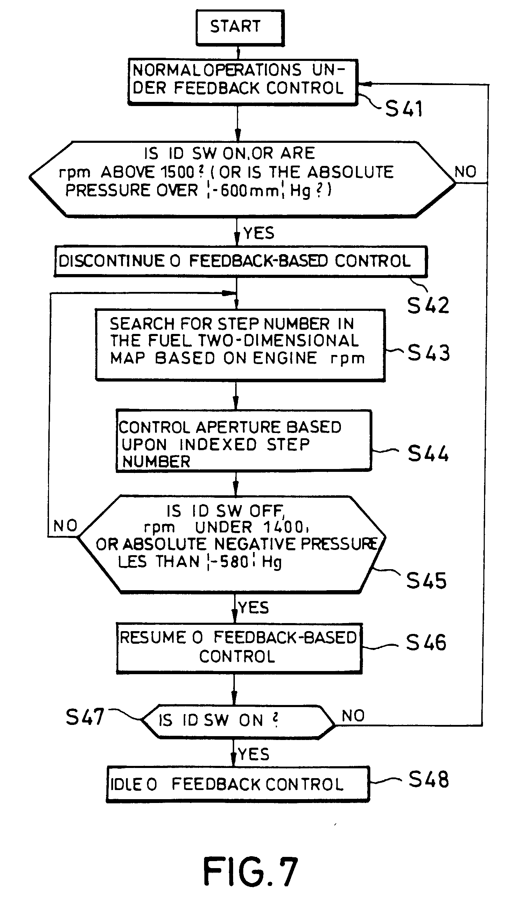

The fuel cutoff operation during rapid deceleration will now be explained with reference to Figure 7.

During normal engine operations under feedback control, when the idle switch goes ON and the engine rpm is 1500 rpm or higher (or when the air absolute intake negative pressure is ¦-600¦ mm Hg or larger), a determination is made that operations are in the fuel cutoff operating range. In addition to the feedback control being discontinued, an internal two-dimensional map of step numbers for various engine rpm levels is used (see Table 2) to determine the step number to be used during fuel cuts to control the aperture of the bleed air control valve (steps S41 through S44, range C in Figure 8).

**Table 2:**

| **Two Dimensional Map for Fuel Cutoffs** | | | | |
|---|---|---|---|---|
| **Engine RPM** | **1700** | **2000** | **2500** | **3000** |
| **Step Number** | **120** | **150** | **180** | **200** |

Thereupon a determination is made of whether or not the idle switch is OFF, the engine rpm is under 1400, or the absolute negative air intake pressure is less than ¦-580 mm¦ Hg (step S45). If none of the above conditions has been met, there is a return to S43, and the fuel cutoff-based step control is continued. On the other hand, when any one of the aforementioned three conditions are met, the O₂-based feedback control is resumed (step S46). Additionally, when the idle switch is not ON, a return is made to the conventional O₂ feedback control (steps S47, S48), and if the idle switch is on, idling is controlled using an O₂ based feedback control.

When the engine rpm is in the 3000 rpm range or above, according to the above described fuel cut (ie fuel reduction) two dimensional map (Table 2), the maximum fuel cut at step 200 is instituted, and from there, as the engine rpm decrease, the step number is gradually lowered, which diminishes the magnitude of the fuel cut towards the minimum fuel cut rate. Thus the nearer the engine rpm is to the fuel threshold rpm, the greater the amount of fuel supply.

According to the above-described embodiment, during rapid deceleration, with the throttle valve 32 being quickly closed when the engine is still operating at high speeds, the rapid deceleration condition is detected by the signals from the idle switch, the engine speed sensor and the absolute negative pressure sensor 44, said detection signals causing the ECU 42 to control the aperture of the bleed air control valve 27 based upon the step number for fuel cut operations. In particular the aperture of the bleed air control valve is widened so that it is wider than that which would be required for the theoretical air/fuel mixture, whereby the amount of fuel supply is decreased and the fuel economy of the engine is improved. It is also effective in preventing unburnt gas from being expelled through the exhaust system. Since the magnitude of the fuel decrease is lower as the engine speed decreases, that means within the fuel cut-off range the lower the eninge speed, the smaller the magnitude of fuel cut, the torque shock resulting from the rapid fuel increase from the zero fuel supply level when returning to normal operation conditions in conventional designs is alleviated. Moreover since the above-described fuel restriction is accomplished by controlling the aperture of the bleed air control valve, a specialized fuel cut valve is not required and thereby the number of parts and costs for the device are reduced.

During normal O₂ feedback operations, when the aforementioned throttle valve 32 aperture is changed, causing changes in the flow of intake air, the above mentioned ECU 42 receives the output from the O₂ sensor 16 and controls the step number of the step motor 27b for the bleed air control valve 27 so that λ = 1. In this case, as described above, the overall device has been designed so that the λ = 1 condition will be met with a 50% aperture for the bleed air control valve, therefore the above mentioned step motor 27b is held approximately at step 100.

On the other hand, manufacturing variations or tolerances in the fabrication of the above mentioned main jet 22a, needle valve 31, etc. can cause a variation in the step number required for the aforementioned λ 1 = condition to vary as shown in Figure 3(b) from 100 to about 150. In such a case, if the step control remained at 100, then with an air intake flow volume of Q, there would be an increase of q' over the design specification for fuel flow q, and the mixture would be on the rich side. In such a case, the feedback control would adjust the step number from 100 to the aforementioned 150, but as a result, the latitude for adjustment of the bleed air valve aperture would be decreased from 50% to about 30%, narrowing the range of possible adjustment on the lean side.

However, in the engine in this embodiment, the cross section of an auxiliary air passage 25 is adjusted by a manual adjustment valve at the time of engine shipment, and accordingly 100 becomes the standard step number for the λ = 1 operational mixtures. To explain the adjustment of this manual valve in case the step number does slip to 150, first the engine is brought to the hot idle state so that the feedback control is operating. In this condition, the manual valve 36 can be opened to increase the cross section of inlet 35a and thereby increase the flow of air into the fuel supply chamber 22. Thereupon the gaseous fuel flow is decreased by the same amount as the air flow is increased to lean out the air/fuel mixture. This causes the ECU 42 feed back control to narrow the bleed air control valve and to reduce the step number. As a result, the standard step number for λ = 1 can be returned to 100.

In this embodiment, when overheating of the catalyst is detected from the temperature of the catalyst itself, control is carried out by the overheated range step control on the steps of the bleed air control valve at the rate of a 0.85 multiple of the step values in the WOT two dimensional step values shown in Table 2, and thereby the air/fuel mixture becomes richer and catalyst damage due to melting is averted.

Also, when the WOT is switched ON upon detection of catalyst overheating due to throttle aperture or engine rpm, the O₂ feedback control is carried out for a specific period of time to determine the step number corresponding to λ = 1, and then that step number is multiplied by 0.75, and the resulting step number is used to control the bleed air controi valve to enrich the air/fuel mixture and to prevent the catalyst from melting down.

Moreover, the air/fuel mixture enrichment is achieved without respect to the composition of the fuel used -- the method can be used for gaseous fuei of any composition without the need for storing step values in memory for each type of composition. This lightens the load on the system memory.

Furthermore when the engine is started, in other words, when the engine rpm is 400 rpm or less (while cranking), the aperture of the bleed air control valve is automatically controlled to provide a richer-than-standard air/fuel mixture, and this too allows lower memory capacity.

The embodiment also controls the bleed air control valve 27 aperture during engine start to increase the fuel supply for a richer mixture as described above and eliminates the need for a specialized supplemental fuel valve for starting. The simplified structure averts cost.

## Claims

1. Charge forming device of the venturi-type for gas fueled engines (1) comprising a bleed air circuit including a bleed air control valve (27) for controlling the air/fuel ratio (λ) supplied to the engine (1) having a catalyst (14, 15) in an exhaust arrangement (13), **characterized in that** a detecting device is provided for detecting an overheated state of the catalyst (14, 15) in the exhaust arrangement (13) of the engine (1), and a control unit (42) is provided for narrowing the aperture (22b) of the bleed air control valve (27) to supply a rich air/fuel mixture (λ<1) to said engine (1) in response to detection of the state of overheating of said catalyst (14, 15), and that the control unit (42) comprises a timer means for applying feedback control over a predetermined period of time beginning from the detection of the state of overheating to set the aperture of the bleed air control valve (27) corresponding to a theoretically ideal air/fuel ratio (λ=1), before narrowing the aperture (22b) for supplying the rich air/fuel ratio (λ=1) to the engine (1).

2. Charge forming device as claimed in claim 1, **characterised in that** a feedback control means including a sensor means (16) for detecting the air/fuel ratio (λ) is provided for controlling the aperture of the bleed air control valve (27) in response to the air/fuel ratio (λ) detected.

3. Charge forming device as claimed in claim 1 or 2, **characterised in that** the control unit is formed by an ECU (42) connected to an actuating means (27b) for actuating the bleed air control valve (27).

4. Charge forming device as claimed in claim 3, **characterised in that** the ECU (42) comprises a memory for storing a map for controlling the aperture of the bleed air control valve (27) in response to engine operating conditions.

5. Charge forming device according to one of claims 1 to 4, **characterised in that** a detecting means is provided for detecting the engine rotational speed (rpm), and a control unit (42) is provided for controlling the aperture of the bleed air control valve (27) during startups (rpm≤rpm_{ref}) to supply a rich air/fuel ratio (λ<1).

6. Charge forming device as claimed in claim 5, **characterised in that** a feedback control means including a sensor means (16) for detecting the air/fuel ratio (λ) is provided for controlling the aperture of the bleed air control valve (27) in response to the air/fuel ratio (λ) detected.

7. Charge forming device as claimed in claim 6, **characterised in that** the control unit (42) is connected to an idle switch for initiating the feedback control after finishing idling.

8. Charge forming device according to one of claims 1 to 7 **characterised in that** a detection means (44) for sensing a rapid deceleration of the engine (1) is provided and a control unit (42) is provided for adjusting the aperture of the bleed air control valve during deceleration to lower the fuel supply volume.

9. Charge forming device as claimed in claim 8, **characterised in that** said detection means comprises an idle switch and a speed sensor for detecting the rotational speed of the engine (1), or a pressure sensor (44) for detecting the intake air pressure.

10. Charge forming device as claimed in claim 8 or 9, **characterised in that** the control unit is adapted to widen the aperture of the bleed air control valve (27) the less, the lower the engine rotational speed is.

11. Charge forming device as claimed in at least one of claims 8 to 10, **characterised in that** the control unit is formed by an ECU (42) connected to an actuating means (27b) for actuating the bleed air control valve (27).

12. Charge forming device as claimed in claim 11, **characterised in that** the ECU (42) is connected to a memory for storing a two dimensional map for setting the aperture of the bleed air control valve in response to the engine rotational speed.

## Patentansprüche

1. Gemischbildungsvorrichtung vom Venturi-Typ für gasbetriebene Motoren (1) mit einem Zusatzluftkreis, der ein Steuerventil (27) zum Steuern des Luft/Kraftstoffverhältnisses (λ), das dem Motor (1) zugeführt wird, enthält, wobei der Motor (1) in einer Abgasanordnung (13) einen Katalysator (14, 15) aufweist, **dadurch gekennzeichnet,** daß eine Erfassungseinrichtung vorgesehen ist, um einen überhitzten Zustand des Katalysators (14, 15) in der Abgasanordnung (13) des Motors (1) zu erfassen, und eine Steuereinheit (42) vorgesehen ist, um die Öffnung (22b) des Zusatzluft-Steuerventils (27) zu verkleinern, damit ein angereichertes Luft/Kraftstoffgemisch (λ < 1) dem Motor (1) in Reaktion auf die Erfassung des Überhitzungszustands des Katalysators (14, 15) zugeführt wird, und daß die Steuereinheit (42) eine Zeitgebereinrichtung umfaßt, um eine Rückkopplungssteuerung während einer vorbestimmten Zeitdauer anzuwenden, die mit der Erfassung des Überhitzungszustands beginnt, um die Öffnung des Zusatzluft-Steuerventils (27) entsprechend einem theoretischen idealen Luft/Kraftstoffverhältnis (λ = 1) einzustellen, ehe die Öffnung (22b) verkleinert wird, um das fette Luft/Kraftstoffverhältnis (λ < 1) dem Motor (1) zuzuführen.

2. Gemischbildungsvorrichtung nach Anspruch 1, **dadurch gekennzeichnet,** daß eine Rückkopplungssteuereinrichtung, die eine Sensoreinrichtung (16) zum Erfassen des Luft/Kraftstoffverhältnisses (λ) enthält, vorgesehen ist, um die Öffnung des Zusatzluft-Steuerventils (27) in Reaktion auf das erfaßte Luft/Kraftstoffverhältnis (λ) zu steuern.

3. Gemischbildungsvorrichtung nach Anspruch 1 oder 2, **dadurch gekennzeichnet,** daß die Steuereinheit durch eine elektronische Steuereinheit ECU (42) gebildet ist, die mit einer Betätigungseinrichtung (27b) zur Betätigung des Zusatzluft-Steuerventils (27) verbunden ist.

4. Gemischbildungsvorrichtung nach Anspruch 3, **dadurch gekennzeichnet,** daß die elektronische Steuereinheit ECU (42) einen Speicher zum Speichern einer Tabelle zur Steuerung der Öffnung des Zusatzluft-Steuerventils (27) in Reaktion auf die Motorbetriebsbedingungen aufweist.

5. Gemischbildungsvorrichtung nach einem der Ansprüche 1 bis 4, **dadurch gekennzeichnet,** daß eine Erfassungseinrichtung zum Erfassen der Motordrehzahl (UpM) vorgesehen ist, und eine Steuereinheit (42) zur Steuerung der Öffnung des Zusatzluft-Steuerventils (27) während des Startens (UpM ≤ Upm_{ref}) vorgesehen ist, um ein fettes Luft/Kraftstoffverhältnis (λ < 1) zuzuführen.

6. Gemischbildungsvorrichtung nach Anspruch 5, **dadurch gekennzeichnet,** daß eine Rückkopplungssteuereinrichtung, die eine Sensoreinrichtung (16) zum Erfassen des Luft/Kraftstoffverhältnisses (λ) enthält, vorgesehen ist, um die Öffnung des Zusatzluft-Steuerventils (27) in Reaktion auf das erfaßte Luft/Kraftstoffverhältnis (λ) zu steuern.

7. Gemischbildungsvorrichtung nach Anspruch 6, **dadurch gekennzeichnet,** daß die Steuereinheit (42) mit einem Leerlaufschalter verbunden ist, um die Rückkopplungssteuerung nach Beendigung des Leerlaufs zu initiieren.

8. Gemischbildungsvorrichtung nach einem der Ansprüche 1 bis 7, **dadurch gekennzeichnet,** daß eine Erfassungseinrichtung (44) zum Erfassen eines schnellen Drehzahlabschwungs des Motors (1) vorgesehen ist, und eine Steuereinheit (42) zum Einstellen der Öffnung des Zusatzluft-Steuerventils während des Drehzahlabschwungs vorgesehen ist, um das Kraftstoffzuführvolumen zu verringern.

9. Gemischbildungsvorrichtung, nach Anspruch 8, **dadurch gekennzeichnet,** daß diese Erfassungseinrichtung einen Leerlaufschalter und einen Drehzahlsensor aufweist, um die Drehzahl des Motors (1) zu erfassen, oder einen Drucksensor (44) zum Erfassen des Ansaugluftdrucks.

10. Gemischbildungsvorrichtung nach Anspruch 8 oder 9, **dadurch gekennzeichnet,** daß die Steuereinheit vorgesehen ist, die Öffnung des Zusatzluft-Steuerventils (27) um so weniger weiter zu machen, desto niedriger die Motordrehzahl ist.

11. Gemischbildungsvorrichtung nach zumindest einem der Ansprüche 8 bis 10, **dadurch gekennzeichnet,** daß die Steuereinheit durch eine elektronische Steuereinheit ECU (42) gebildet ist, die mit einer Betätigungseinrichtung (27b) zur Betätigung des Zusatzluft-Steuerventils (27) verbunden ist.

12. Gemischbildungsvorrichtung nach Anspruch 11, **dadurch gekennzeichnet,** daß die elektronische Steuereinheit ECU (42) mit einem Speicher zum Speichern einer zweidimensionalen Tabelle verbunden ist, um die Öffnung des Zusatzluft-Steuerventils in Reaktion auf die Motordrehzahl einzustellen.

## Revendications

1. Dispositif de formation de mélange du type venturi pour des moteurs à essence (1), comprenant un circuit d'air de purge comportant une soupape de commande d'air de purge (27) pour commander le rapport air/carburant (λ) fourni au moteur (1) ayant un catalysateur (14, 15) dans un agencement d'échappement (13), caractérisé en ce qu'est prévu un dispositif de détection, pour détecter un état surchauffé du catalysateur (14, 15) dans l'agencement (13) du moteur (1), et une unité de commande (42) est prévue, pour restreindre l'ouverture (22b) de la soupape de commande d'air de purge (27), afin de fournir un mélange air/carburant riche (λ/1) audit moteur (1), en réponse à la détection de l'état de surchauffe dudit catalysatuer (14, 15) et en ce que l'unité de commande (42) comprend des moyens temporisateurs pour appliquer une commande de rétroaction sur une période prédéterminée commençant à partir de la détection de l'état de surchauffe, afin de régler l'ouverture de la soupape de commande d'air de purge (27) correspondant à un rapport air/carburant théoriquement idéal (λ=1), avant de restreindre l'ouverture (22b) pour fournir le rapport air/carburant riche (λ/1) au moteur (1).

2. Dispositif de formation de mélange selon la revendication 1, caractérisé en ce que des moyens de commande à rétroaction comportant des moyens capteurs (16) pour détecter le rapport air/carburant (λ) sont prévus pour commander l'ouverture de la soupape de commande d'air de purge (27) en réponse au rapport air/carburant (λ) détecté.

3. Dispositif de formation de mélange selon la revendication 1 ou 2, caractérisé en ce que l'unité de commande est formée par une ECU (42) connectée à des moyens d'actionnement (27b) pour actionner la soupape de commande d'air de purge (27).

4. Dispositif de formation de mélange selon la revendication 3, caractérisé en ce que l'ECU (42) comprend une mémoire pour stocker une carte permettant de commander l'ouverture de la soupape de commande d'air de purge (27), en réponse à des conditions de fonctionnement du moteur.

5. Dispositif de formation de mélange selon l'une des revendications 1 à 4, caractérisé en ce que des moyens de détection sont prévus pour mesurer la vitesse de rotation de moteur (tr/mn), et une unité de commande (42) est prévue pour commander l'ouverture de la soupape de commande d'air de purge (27) durant des démarrages (tr/mn≤tr/mn_{ref}), pour fournir un rapport air/carburant riche (λ/1).

6. Dispositif de formation de mélange selon la revendication 5, caractérisé en ce que des moyens de commande à rétroaction comportant des moyens de capteurs (16) pour mesurer le rapport air/carburant (λ) pour commander l'ouverture de la soupape de commande d'air de purge (27), en réponse au rapport air/carburant (λ) détecté.

7. Dispositif de formation de mélange selon la revendication 6, caractérisé en ce que l'unité de commande (42) est connectée à un commutateur de ralenti pour commencer la commande de rétroaction à la fin du ralenti.

8. Dispositif de formation de mélange selon l'une des revendications 1 à 7, caractérisé en ce que des moyens de détection (44), servant à détecter une décélération rapide du moteur (1), sont prévus, et une unité de commande (42) est prévue, pour régler l'ouverture de la soupape de commande d'air de purge durant la détection, afin de réduire le volume d'alimentation en carburant.

9. Dispositif de formation de mélange selon la revendication 8, caractérisé en ce que lesdits moyens de détection comprennent un commutateur de ralenti et un capteur de vitesse, pour mesurer la vitesse de rotation du moteur (1), ou un capteur de pression (44) pour mesurer la pression d'air d'admission.

10. Dispositif de formation de mélange selon la revendication 8 ou 9, caractérisé en ce que l'unité de commande est adaptée pour rétrécir l'ouverture de la soupape de commande d'air de purge (27) d'autant moins que la vitesse de rotation du moteur est plus basse.

11. Dispositf de formation de mélange selon au moins l'une des revendications 8 à 10, caractérisé en ce que l'unité de commande est formée par une ECU (42) connectée à des moyens d'actionnement (27b), pour actionner la soupape de commande d'air de purge (27).

12. Dispositif de formation de mélange selon la revendication 11, caractérisé en ce l'ECU (42) est reliée à une mémoire permettant de stocker une carte bidimensionnelle pour régler l'ouverture de la soupape de commande d'air de purge, en réponse à la vitesse de rotation du moteur.
